# EUROPÄISCHE PATENTSCHRIFT

(11) **EP 3 440 908 B1**
(45) Veröffentlichungstag und Bekanntmachung des Hinweises auf die Patenterteilung: **03.06.2020**
(21) Anmeldenummer: 18401070.0
(22) Anmeldetag: 01.08.2018
(51) Int. Cl.: A01C 7/04, A01C 7/20

(54) **VEREINZELUNGSVORRICHTUNG FÜR GRANULARES MATERIAL MIT UMRÜST-SET**
SINGLE SEED METERING DEVICE FOR GRANULAR MATERIAL WITH RETROFIT SET
DISPOSITIF DE SÉPARATION POUR MATÉRIAU GRANULAIRE AVEC ENSEMBLE DE CONVERSION

(30) Priorität: 08.08.2017 DE 102017117974
(43) Veröffentlichungstag der Anmeldung: 13.02.2019
(73) Patentinhaber: Amazonen-Werke H. Dreyer GmbH & Co. KG, 49205 Hasbergen (DE)
(72) Erfinder: Teckemeyer, Stephan, 49504 Lotte (DE)

(56) Entgegenhaltungen:
- EP-A1- 3 292 748
- DE-A1-102012 105 048
- DE-A1-102015 001 896
- DE-A1-102015 112 912
- DE-A1-102015 114 155

## Beschreibung

Die Erfindung betrifft eine Vereinzelungsvorrichtung mit einem Umrüst-Set für granulares Material, insbesondere Saatgut.

Vereinzelungsvorrichtungen finden in landwirtschaftlichen Sämaschinen Anwendung, um einzelne Saatgutkörner an Abgabeelemente, etwa Säschare, weiterzuleiten und dann auf einer landwirtschaftlichen Fläche abzulegen. Die einzelnen Körner sollten dabei in vorherbestimmten Abständen abgelegt werden. Um das Saatgut zu vereinzeln, verwenden bekannte Vereinzelungsvorrichtungen eine mit einer Druckdifferenz beaufschlagbare Vereinzelungsscheibe. Die Vereinzelungsscheibe umfasst Perforationen, an denen sich das Saatgut anlagern kann, wodurch es zu einer Vereinzelung kommt.

Diese Vereinzelungstechnik ist jedoch nicht zufriedenstellend für Getreide, wie etwa Weizen, Roggen, Gerste, Hafer oder Raps anwendbar. Eine speziell auf einen derartigen Einsatz gerichtete Vereinzelungsvorrichtung ist daher aus der DE 10 2012 105 048 A1 bekannt geworden. Diese Vereinzelungsvorrichtung umfasst eine in einem Gehäuse konzentrisch rotierende Fördereinrichtung, die annähernd tangential an eine Innenmantelfläche des Gehäuses anschließt. In der Fördereinrichtung sind Taschen gebildet, in denen Körner des Saatguts gedrängt und kreisförmig befördert werden, bis in einem weiteren Gehäusebereich durch eine veränderte Kontur der Innenmantelfläche des Gehäuses und unter Zentrifugalkrafteinflüssen nur jeweils ein einzelnes Korn in der Tasche verbleibt, während überschüssige Körner abgesondert und zur erneuten Förderung in einen ersten Gehäusebereich zurückgeführt werden.

Eine entsprechende Vereinzelungsvorrichtung, welche noch unabhängiger von Form und Größe der Körner ist, ist aus der DE 10 2015 114 147 A1 bekannt.

Es sind jedoch Situationen denkbar, in denen eine volumetrische Dosierung geeigneter wäre, beispielsweise für hohe Aussaatstärken oder für nicht vereinzelbare Saatgutmischungen. Die bekannten Vereinzelungsvorrichtungen sind hierfür ungeeignet. Der Landwirt ist folglich gezwungen, zwei Maschinen für diese unterschiedlichen Aufgaben vorzusehen.

Aufgabe der Erfindung ist es daher, eine Möglichkeit zu schaffen, eine Vereinzelungsvorrichtung auch zum volumetrischen Dosieren zu verwenden. Diese Aufgabe wird durch eine Vereinzelungsvorrichtung mit einem Umrüst-Set gemäß Patentanspruch 1 gelöst. Weitere vorteilhafte Ausgestaltungen der Erfindung sind in den abhängigen Ansprüchen angegeben.

Gemäß der Erfindung ist es also vorgesehen, eine Vereinzelungsvorrichtung mit einem Umrüst-Set für granulares Material, insbesondere Saatgut, bereitzustellen, wobei die Vereinzelungsvorrichtung eine in einem Gehäuse drehbar gelagerte Fördereinrichtung umfasst, die mit einem Führungselement so zusammenwirkt, dass granulares Material von einem Aufnahmebereich in einen Abgabebereich förderbar ist und die Vereinzelungsvorrichtung eine Vordosiereinheit umfasst, die über eine Seitenwand in das Gehäuse mündet, wobei mit der Vordosiereinheit granulares Material in das Gehäuse eingebracht werden kann. Das Umrüst-Set soll dabei eine Vergleichmäßigungsscheibe und einen Wandeinsatz umfassen.

Die Vergleichmäßigungsscheibe ist vorgesehen, um anstelle der Fördereinrichtung im Gehäuse positioniert zu werden. Der Wandeinsatz ist so im Gehäuse anordenbar, dass er mit der Vergleichmäßigungsscheibe und Teilen der Seitenwand des Gehäuses, über welche die Vordosiereinheit in das Gehäuse mündet, einen Vergleichmäßigungsraum bildet, in den mit der Vordosiereinheit granulares Material eingebracht werden kann. Der Wandeinsatz ist außerdem so ausgebildet, dass sich die durch den Wandeinsatz gebildete radiale Wandung des Vergleichmäßigungsraums wenigstens abschnittsweise zur Vergleichmäßigungsscheibe hin erweitert, und dass die durch den Wandeinsatz gebildete radiale Wandung das Führungselement zum Inneren des Vergleichmäßigungsraums hin abdeckt.

Durch diese Maßnahmen können die für die Vereinzelung verantwortlichen Elemente der Vereinzelungsvorrichtung, nämlich die Fördereinrichtung und das Führungselement ersetzt bzw. abgedeckt werden, so dass es zu keiner Vereinzelung kommt. Stattdessen werden Körner des granularen Materials, welche gruppenweise durch die Vordosiereinheit in das Gehäuse eingebracht werden durch die Vergleichmäßigungsscheibe im Vergleichmäßigungsraum vergleichmäßigt, also zufallsverteilt, und können dann gleichmäßig abgegeben werden.

Es ist somit möglich, eine Vereinzelungsvorrichtung so umzubauen, dass eine volumetrische Dosierung möglich ist. Eine Sämaschine mit entsprechenden Vereinzelungvorrichtungen kann somit einfach unter Verwendung einer entsprechenden Anzahl von Umrüst-Sets in eine volumetrisch arbeitende Sämaschine umgebaut werden. Die Anschaffung zweier separater Maschinen kann für den Landwirt entfallen.

Bei dem granularen Material kann es sich insbesondere um Saatgut handeln, alternativ oder zusätzlich jedoch auch um granulares Düngemittel oder granulares Pestizid. Das Saatgut kann insbesondere Saatgut für Getreide, wie etwa Weizen, Roggen, Gerste, Hafer oder Raps sein.

Mit dem Begriff "Scheibe" werden hierin Elemente bezeichnet, die einen kreisförmigen Umfang aufweisen, dessen Radius größer ist als die mittlere Dicke des Elements in axialer Richtung. Eine Scheibe in diesem Sinne kann zylinderförmig sein, muss aber nicht.

Die Begriffe "radial" und "axial" beziehen sich hierin, wenn nicht anders angegeben, auf die Drehachse der Fördereinrichtung der Vereinzelungsvorrichtung, beziehungsweise auf die damit übereinstimmende Drehachse der Vergleichmäßigungsscheibe, wenn diese anstelle der Fördereinrichtung in das Gehäuse der Vereinzelungsvorrichtung eingesetzt wird.

Die Vordosiereinheit kann grundsätzlich wie in der DE 10 2015 114 155 A1 beschrieben ausgebildet sein.

Durch die Vordosiereinheit kann insbesondere eine volumetrische Vordosierung erzielt werden. Mit anderen Worten kann die Vordosiereinheit so ausgebildet sein, dass eine definierte Menge des granularen Materials pro Zeiteinheit in das Gehäuse der Dosiervorrichtung einbringbar ist. Die definierte Menge kann insbesondere dahingehend definiert sein, dass sie innerhalb eines vorherbestimmten Anzahlbereichs oder Volumensbereichs liegt. Die Vordosiereinheit kann also als volumetrische Vordosiereinheit bezeichnet werden.

Dadurch, dass sich die durch den Wandeinsatz gebildete radiale Wandung des Vergleichmäßigungsraums wenigstens abschnittsweise zur Vergleichmäßigungsscheibe hin erweitert, wird das granulare Material zur Vergleichmäßigungsscheibe hin gedrängt, selbst wenn Körner des granularen Materials zunächst von der Vergleichmäßigungsscheibe abprallen und von der Vergleichmäßigungsscheibe weggelenkt werden. Die Wandung kann sich insbesondere konisch zur Vergleichmäßigungsscheibe hin erweitern. Der Wandeinsatz kann also wenigstens abschnittsweise die Form der Mantelfläche eines Kegelstumpfes aufweisen.

Der Wandeinsatz kann insbesondere einen tangentialen Auslass aufweisen, der in den Abgabekanal des Gehäuses der Vereinzelungsvorrichtung, insbesondere fluchtend, mündet, wenn der Wandeinsatz im Gehäuse angeordnet ist. Über diesen tangentialen Auslass können die vergleichmäßigten Körner des granularen Materials also aus dem Vergleichmäßigungsraum ausgebracht werden. In weiterer Folge können die Körner des granularen Materials wie im normalen Betrieb der Vereinzelungsvorrichtung über ein entsprechendes Abgabeelement, etwa ein Säschar, auf einer landwirtschaftlichen Fläche abgelegt werden.

Die axialen Begrenzungslinien der Öffnung des tangentialen Auslasses zum Vergleichmäßigungsraum können in Drehrichtung kontinuierlich aufeinander zulaufen. Mit anderen Worten kann die Öffnung frei von Ecken sein, an denen Begrenzungslinien der Öffnung rechtwinklig aneinanderstoßen. Dadurch schließt sich die Öffnung nicht abrupt, wenn ein Teil der Vergleichmäßigungsscheibe darüberstreicht, sondern allmählich, wodurch Verklemmungen des Saatguts an einer Kante weitestgehend verhindert werden können.

Der Wandeinsatz kann insbesondere zerstörungsfrei lösbar im Gehäuse der Vereinzelungsvorrichtung anordenbar sein. Insbesondere kann der Wandeinsatz über eine Steckverbindung im Gehäuse angeordnet werden.

Der Teil des Wandeinsatzes, der die radiale Wandung des Vergleichmäßigungsraums bildet, kann sich von der Seitenwand des Gehäuses, über die die Vordosiereinheit in das Gehäuse mündet, bis zur Vergleichmäßigungsscheibe erstrecken. Die Erstreckung des Teils in axialer Richtung kann dabei konstant sein. Abgesehen von der Öffnung zum tangentialen Auslass kann die Wandung in Richtung des Vergleichmäßigungsraums glatt und formelementefrei ausgebildet sein.

Die Vergleichmäßigungsscheibe kann ebenfalls zerstörungsfrei lösbar im Gehäuse der Vereinzelungsvorrichtung anordenbar sein. Insbesondere kann die Vergleichmäßigungsscheibe zerstörungsfrei lösbar mit der Antriebswelle des Motors der Vereinzelungsvorrichtung verbindbar sein, die im vorgesehenen Betrieb der Vereinzelungsvorrichtung die Fördereinrichtung antreibt.

Auch drehbar gelagerte Elemente der Vordosiereinheit können zerstörungsfrei lösbar mit der Vergleichmäßigungsscheibe verbindbar sein. Dadurch können diese über die Vergleichmäßigungsscheibe mit der Antriebswelle des Motors verbunden werden. Dafür kann die Vergleichmäßigungsscheibe insbesondere eine Nabe aufweisen, mit der die Antriebswelle des Motors der Vereinzelungsvorrichtung einerseits und ein oder mehrere drehbar gelagerte Elemente der Vordosiereinheit andererseits verbindbar sind.

Auch zur Anordnung der Vergleichmäßigungsscheibe finden bevorzugt Steckverbindungen Anwendung.

Das Gehäuse der Vereinzelungsvorrichtung kann entsprechend so ausgebildet sein, dass es zerstörungsfrei geöffnet werden kann, um die Vergleichmäßigungsscheibe und den Wandeinsatz im Inneren des Gehäuses anzuordnen.

Die Vergleichmäßigungsscheibe kann entlang ihres Umfangs ein oder mehrere Ausnehmungen umfassen, durch die Mitnahmetaschen für das granulare Material gebildet werden. Durch diese Mitnahmetaschen kann eine Vergleichmäßigung des über die Vordosiereinheit eingebrachten granularen Materials erreicht werden. Die Mitnahmetaschen können insbesondere in Form von Sacklöchern ausgebildet sein, die in einer dem Vergleichmäßigungsraum zugewandten Seite der Vergleichmäßigungsscheibe angeordnet sind.

Die Vergleichmäßigungsscheibe kann insbesondere starr ausgebildet sein.

Gemäß einer alternativen Ausführungsform kann die Vergleichmäßigungsscheibe einen oder mehrere flexible Mitnehmer aufweisen, die schräg zur Drehrichtung der Vergleichmäßigungsscheibe angeordnet sind, so dass deren in Drehrichtung vordere Seite jeweils zum Vergleichmäßigungsraum hin weist. Die flexiblen Mitnehmer können somit den Körnern sowohl einen Mitnahmeimpuls in Drehrichtung als auch einen Impuls von der Vergleichmäßigungsscheibe weg übergeben.

Der Wandeinsatz kann so im Gehäuse anordenbar sein, dass zwischen der Vergleichmäßigungsscheibe und der Seitenwand des Gehäuses, die der Seitenwand, über welche die Vordosiereinheit in das Gehäuse mündet, gegenüber liegt, ein Sammelraum gebildet wird, der radial durch Teile des Wandeinsatzes begrenzt wird. Durch diesen Sammelraum können Körner des granularen Materials im Vergleichmäßigungsprozess gehalten werden, auch wenn zwischen den flexiblen Mitnehmern Freiräume in der Vergleichmäßigungsscheibe vorhanden sind, durch welche Körner des granularen Materials hindurchtreten können.

Im Sammelraum kann wenigstens ein Mitnehmer drehbar angeordnet sein, um im Sammelraum angeordnete Körner über einen Rückführkanal aus dem Gehäuse auszuschleusen und erneut der Vordosiereinheit zuzuführen. Der Rückführkanal kann einer Verbindung zwischen dem Inneren des Gehäuses und der Vordosiereinheit entsprechen, die vorgesehen ist, um während des Vereinzelungsprozesses ausgeschleuste Körner erneut der Vordosiereinheit zuzuführen.

Der im Sammelraum drehbar gelagerte Mitnehmer kann insbesondere mit der Vergleichmäßigungsscheibe verbunden sein, insbesondere starr. Der im Sammelraum angeordnete Mitnehmer kann flexibel ausgebildet sein, um eine Beschädigung des granularen Materials zu vermeiden.

Die flexiblen Mitnehmer, die im Sammelraum oder zur Vergleichmäßigung Anwendung finden, können jeweils aus einem flexiblen Material bestehen oder ein solches umfassen, insbesondere ein Elastomer, beispielsweise einen vulkanisierten Kautschuk.

Wenn im Sammelraum wenigstens ein Mitnehmer angeordnet ist, kann der Sammelraum radial auch durch Teile der Gehäusewandung der Vereinzelungsvorrichtung begrenzt werden. Mit anderen Worten muss sich der Wandeinsatz in diesem Fall nicht bis in den Sammelraum erstrecken, jedenfalls nicht vollständig.

An der Vergleichmäßigungsscheibe können auch ein oder mehrere flexible Mitnehmer angeordnet sein, die schräg zur Drehrichtung der Vergleichmäßigungsscheibe angeordnet sind, so dass deren in Drehrichtung vordere Seite jeweils vom Vergleichmäßigungsraum weg und zum Sammelraum hin weisen. Durch solche Mitnehmer können Körner des granularen Materials aktiv in den Sammelraum verbracht werden. Dies kann bei sehr kleinen Aussaatmengen, geringen Reihenweiten und/oder langsamen Fahrgeschwindigkeiten von Vorteil sein.

Die Vordosiereinheit kann eine Ausgabeöffnung aufweisen, die radial in den Vergleichmäßigungsraum mündet, wobei ein oder mehrere der flexiblen Mitnehmer, deren in Drehrichtung vordere Seite vom Vergleichmäßigungsraum weg- und zum Sammelraum hinweist, so ausgebildet sind, dass sie ganz oder teilweise die Ausgabeöffnungen überstreichen und so aus der Ausgabeöffnung austretende Körner des granularen Materials direkt in den Sammelraum leiten. Dadurch kann noch effizienter der Massenstrom verringert werden, um sehr kleine Aussaatmengen zu ermöglichen.

In bekannter Weise kann die Vordosiereinheit in das Innere des Gehäuses hineinreichen, so dass Teile der Wandung der Vordosiereinheit im Inneren des Gehäuses der Vereinzelungsvorrichtung angeordnet sind. In diesem Fall kann der Vergleichmäßigungsraum auch durch Teile der Wandung der Vordosiereinheit begrenzt werden. Die begrenzende Wandung der Vordosiereinheit kann in diesem Fall insbesondere koaxial zu der durch den Wandeinsatz gebildeten radialen Wandung angeordnet sein. Der Wandeinsatz kann insbesondere koaxial zur Drehachse der Vergleichmäßigungsscheibe im Gehäuse angeordnet werden.

Mit der Vordosiereinheit kann granulares Material von einem Reservoir an die Fördereinrichtung bzw. die Vergleichmäßigungsscheibe gefördert werden, wobei mit der Vordosiereinheit granulares Material in Rotation versetzt und in Richtung der Drehachse der Fördereinrichtung bzw. der Vergleichmäßigungsscheibe bewegt werden kann.

Unter einer Bewegung in Richtung der Drehachse kann jede Bewegung verstanden werden, die wenigstens eine Bewegungskomponente aufweist, die parallel zur Drehachse verläuft. Das granulare Material kann mit Hilfe der Vordosiereinheit in Richtung der Drehachse und zur Fördereinrichtung bzw. Vergleichmäßigungsscheibe hin bewegt werden.

Die Vordosiereinheit kann eine drehbar gelagerte Scheibe umfassen, die am Ende eines Rohrabschnittes angeordnet ist, dessen Innendurchmesser zur Scheibe hin zunimmt, wobei an der dem Rohrabschnitt zugewandten Seite der Scheibe ein oder mehrere Mitnehmer angeordnet sind. Der Rohrabschnitt kann insbesondere Teil der Vordosiereinheit sein. Durch die Mitnehmer können insbesondere ruhende Körner aus einem Reservoir in eine Drehbewegung versetzt werden.

Als Reservoir kann hierin insbesondere ein Element verstanden werden, in dem granulares Material angeordnet und der Vordosiereinheit derart bereitgestellt werden kann, dass diese das granulare Material aus dem Reservoir an die Fördereinrichtung fördern kann. In dem Reservoir kann also ein Puffer von granularem Material angeordnet werden. Das Reservoir kann insbesondere einem Sammelbehälter entsprechen, mit welchem das Gehäuse der Dosiervorrichtung, insbesondere über die Vordosiereinheit, verbunden ist.

Der eine oder die mehreren Mitnehmer können mit der Scheibe verbunden sein, insbesondere nicht zerstörungsfrei lösbar. Beispielsweise können der eine oder die mehreren Mitnehmer als Erhebungen an der Scheibe ausgebildet sein. Es ist jedoch auch denkbar, die Mitnehmer an einem separaten Element anzuordnen, welches nicht unmittelbar mit der Scheibe verbunden ist, aber an der dem Rohrabschnitt zugewandten Seite der Scheibe angeordnet ist.

Anstelle einer Scheibe könnte auch ein anderer geometrischer Körper verwendet werden, der das Ende des Rohrabschnittes abschließt und den Rohrabschnitt somit begrenzt, beispielsweise ein Kreiszylinder, ein Hohlzylinder oder ein Konus.

Die Scheibe bzw. das entsprechende Element kann zerstörungsfrei lösbar in der Vordosiereinheit bzw. der Vereinzelungsvorrichtung angeordnet sein. Dadurch kann die Scheibe bzw. das entsprechende Element entfernt werden, wenn die Vereinzelungsvorrichtung in Kombination mit einem Verteilkopf arbeitet, der eine volumetrische Vordosierung bewirkt.

Der sich erweiternde Rohrabschnitt kann insbesondere mit dem Reservoir verbunden sein. Der Rohrabschnitt kann insbesondere unmittelbar oder direkt an das Reservoir angrenzen oder anschließen. Der Rohrabschnitt kann bezüglich des Reservoirs so angeordnet sein, dass im Betrieb der Dosiervorrichtung granulares Material unter Schwerkraftwirkung aus dem Reservoir in den Rohrabschnitt gelangt. Das Reservoir kann im Betrieb der Vorrichtung also wenigstens teilweise höher als der Rohabschnitt angeordnet sein. Dadurch kann auf ein separates Förderelement verzichtet werden, welches granulares Material aus dem Reservoir in die Vordosiereinheit, insbesondere in den Rohrabschnitt, verbringt. Es ist aber auch möglich, den Rohrabschnitt bezüglich des Reservoirs anders anzuordnen und eine Fördereinrichtung vorzusehen, um granulares Material aus dem Reservoir in die Vordosiereinheit, insbesondere in den Rohrabschnitt, zu fördern.

Der Rohrabschnitt kann sich insbesondere zur Scheibe hin konisch erweitern. Der Rohrabschnitt kann bezüglich einer Längs- oder Symmetrieachse rotationssymmetrisch ausgebildet sein. Dadurch ist eine besonders gleichmäßige Zuführung von granularem Material an die drehbar gelagerte Scheibe möglich.

Die Längs- oder Symmetrieachse des sich erweiternden Rohrabschnittes kann insbesondere koaxial oder parallel zur Drehachse der Fördereinrichtung und/oder der Scheibe verlaufen.

Durch den einen oder die mehreren oben genannten Mitnehmer können zunächst ruhende Körner des granularen Materials in Rotation versetzt werden. Aufgrund der Fliehkraft bewegen sich diese dann radial nach außen, bis sie an die Wandung des sich erweiternden Rohrabschnittes treffen. Dadurch, dass dessen Innendurchmesser zur Scheibe hin zunimmt, können die sich der Wandung entlang bewegenden Körner dann eine Bewegungskomponente in Richtung der Längs- oder Symmetrieachse bekommen und somit in Richtung der Drehachse der Fördereinrichtung.

Die Scheibe kann wenigstens eine Öffnung oder Aussparung umfassen, über die der Rohrabschnitt mit einer Vordosierkammer verbunden ist, in der wenigstens ein drehbarer Mitnehmer angeordnet ist. Bei der Öffnung kann es sich um eine Durchgangsöffnung in der Scheibe handeln. Eine Aussparung kann insbesondere eine Aussparung am Rand der Scheibe sein, so dass sich ein Durchlass zwischen dem Inneren des Rohrabschnitts und der Vordosierkammer ergibt, wobei der Durchlass durch die in der Scheibe angeordnete Aussparung sowie durch Teile der Wandung des Rohrabschnitts gebildet wird.

Die Vordosierkammer kann insbesondere an die Seite der Scheibe angrenzend angeordnet sein, die vom sich erweiternden Rohrabschnitt abgewandt ist.

Der wenigstens eine drehbare Mitnehmer, der in der Vordosierungskammer angeordnet ist, kann um dieselbe Drehachse drehbar sein wie die Scheibe der Vordosiereinheit. Insbesondere kann der wenigstens eine Mitnehmer auch durch denselben Antrieb angetrieben werden wie die Scheibe. Vorteilhafterweise ist der Mitnehmer, insbesondere starr, mit der Scheibe verbunden. Durch den wenigstens einen drehbaren Mitnehmer können Körner, welche über die Öffnungen oder Aussparungen in die Vordosierkammer gelangen weiter beschleunigt werden.

Der wenigstens eine drehbare Mitnehmer, der in der Vordosierungskammer angeordnet ist, kann aus einem flexiblen Material bestehen oder ein solches umfassen, insbesondere ein Elastomer, beispielsweise einen vulkanisierten Kautschuk. Dadurch kann eine schonendere Behandlung des granularen Materials in der Vordosierungskammer erzielt werden.

Die Vordosierkammer kann radial durch eine Wandung begrenzt sein, die eine Öffnung aufweist, über die die Vordosierkammer mit einer äußeren Kammer verbunden ist, welche die Vordosierkammer umgibt. Dadurch, dass die Körner des granularen Materials in der Vordosierkammer über den wenigstens einen Mitnehmer beschleunigt werden können, kann sich deren Rotationsgeschwindigkeit derart erhöhen, dass sie sich aufgrund der Fliehkraft radial nach außen bewegen und auf die die Vordosierkammer radial begrenzende Wandung stoßen. Sobald die Körner den Bereich der Öffnung passieren, können die Körner wiederum aufgrund von Fliehkraft die Vordosierkammer verlassen und in die äußere Kammer gelangen.

Die äußere Kammer kann die Vordosierkammer insbesondere radial umgeben. In der äußeren Kammer kann wenigstens ein weiterer drehbarer Mitnehmer angeordnet sein. Alternativ kann in der äußeren Kammer aber auch bereits die Fördereinrichtung der Dosiervorrichtung angeordnet sein. In der äußeren Kammer kann also bereits die Dosierung stattfinden. In diesem Fall entspricht auch der Vergleichmäßigungsraum der äußeren Kammer.

Alternativ kann die äußere Kammer zwischen der Vordosierkammer und der Fördereinrichtung bzw. dem Vergleichmäßigungsraum angeordnet sein. In diesem Fall kann auch die äußere Kammer radial durch eine Wandung begrenzt sein, die eine Öffnung aufweist. Durch einen in der äußeren Kammer rotierenden Mitnehmer können Körner des granularen Materials dann analog der Förderung von der Vordosierkammer in die Außenkammer von der Außenkammer in den Gehäusebereich der Fördereinrichtung bzw. in den Vergleichmäßigungsraum bewegt werden.

Auch der wenigstens eine drehbare Mitnehmer, der in der äußeren Kammer angeordnet ist, kann aus einem flexiblen Material bestehen oder ein solches umfassen, insbesondere ein Elastomer, beispielsweise einen vulkanisierten Kautschuk. Dadurch kann eine schonendere Behandlung des granularen Materials in der äußeren Kammer erzielt werden.

Die Scheibe kann durch einen Motor oder Antrieb antreibar, insbesondere in Rotation versetzbar, sein. Die Scheibe der Vordosiereinheit kann insbesondere mit der Vergleichmäßigungsscheibe verbindbar sein, sodass sie durch einen gemeinsamen Antrieb antreibbar sind.

Die Fördereinrichtung bzw. die Vergleichmäßigungsscheibe und die Scheibe der Vordosiereinheit können insbesondere koaxial angeordnet sein. Dadurch ist eine Vereinfachung des Aufbaus möglich. Die Scheibe und die Fördereinrichtung bzw. die Vergleichmäßigungsscheibe können also eine gemeinsame Drehachse aufweisen. Entlang derer kann eine Antriebswelle des gemeinsamen Antriebs verlaufen, mit der die Fördereinrichtung bzw. die Vergleichmäßigungsscheibe und/oder die Scheibe unmittelbar verbunden sind. Auf ein Getriebe kann also für den Antrieb verzichtet werden.

Die Drehachse der Fördereinrichtung bzw. der Vergleichmäßigungsscheibe und die Drehachse der Scheibe der Vordosiereinheit können auch einen Winkel zueinander einschließen, der kleiner als 10°, insbesondere kleiner als 5° ist.

Auch der wenigstens eine Mitnehmer der Vordosierkammer und der gegebenenfalls vorhandene wenigstens eine Mitnehmer der äußeren Kammer können durch den gemeinsamen Antrieb antreibbar sein. Auch diese Mitnehmer können um eine Drehachse drehbar sein, welche mit der Drehachse der Scheibe und der Fördereinrichtung übereinstimmt.

Die Scheibe sowie der wenigstens eine Mitnehmer der Vordosierkammer und/oder der äußeren Kammer können insbesondere starr mit der Fördereinrichtung bzw. der Vergleichmäßigungsscheibe verbunden sein. Dadurch kann auf besonders einfache Weise eine Rotationsbewegung der Förderereinrichtung auf die Scheibe bzw. die Mitnehmer übertragen werden. Die Scheibe der Vordosiereinheit kann dafür mit der Fördereinrichtung bzw. der Vergleichmäßigungsscheibe zerstörungsfrei lösbar verbunden werden.

An einer Innenfläche des Rohrabschnittes, dessen Innendurchmesser zur Scheibe hin zunimmt, kann ein Störelement in Form einer Erhebung angeordnet sein. Durch ein solches Störelement können Blockaden der Öffnungen oder Aussparungen der Scheibe aufgelöst werden, da sich die durch die Mitnehmer der Scheibe in Rotation versetzten Körner im Bereich des Störelements neu ordnen müssen und dadurch gewissermaßen aufgewirbelt werden.

Das Störelement kann insbesondere keilförmig ausgebildet sein. Dadurch ist es möglich, auf Körner des granularen Materials eine Kraft in radialer Richtung auszuüben und damit eine Neuorientierung der Körner zu bewirken.

Das Störelement kann insbesondere so angeordnet sein, dass es wenigstens während eines Teils der Rotationsbewegung der Scheibe direkt oder unmittelbar an die Öffnung oder Aussparung der Scheibe angrenzt.

In bekannter Weise kann die Vereinzelungsvorrichtung derart ausgebildet sein, dass sie eine in einem Gehäuse drehbar gelagerte Fördereinrichtung aufweist, die wenigstens einen Zentrierschieber umfasst, wobei ein Führungselement so im Gehäuse angeordnet ist, dass der Zentrierschieber bei seiner Drehbewegung das Führungselement wenigstens teilweise überstreicht, wobei der Zentrierschieber und das Führungselement so ausgebildet sind, dass im Betrieb der Vereinzelungsvorrichtung Saatgut durch den Zentrierschieber entlang einer Führungsfläche des Führungselements von einem Aufnahmebereich in einen Abgabebereich geschoben wird, und wobei der Zentrierschieber so ausgebildet ist, dass er ein Korn des Saatguts beim Transport vom Aufnahmebereich zum Abgabebereich zentriert, indem er es wenigstens teilweise beidseitig abstützt oder führt.

Nicht zentrierte Körner, die im Aufnahmebereich aufgenommen und entlang der Führungsfläche transportiert werden, können infolge ausgesondert werden, sodass im Abgabebereich das zentrierte Korn verbleibt und an die Abgabeeinrichtung zur Ablage auf einer landwirtschaftlichen Fläche weitergeleitet werden kann. Insbesondere kann genau ein Korn durch den Zentrierschieber zentriert geführt werden.

Die Angabe "beidseitig abstützt oder führt" bedeutet hier, dass der Zentrierschieber Elemente umfasst, welche das zentrierte Korn an beiden Seiten abstützen oder führen. Damit kann eine Bewegung des Korns quer zur Drehrichtung reduziert oder vermieden werden, sodass das zentrierte Korn im Wesentlichen entlang einer vorbestimmten Bewegungsbahn vom Aufnahmebereich in den Abgabebereich geschoben wird. Um das Korn seitlich zu führen ist es nicht erforderlich, dass der Zentrierschieber stets in direktem Kontakt mit dem Korn steht. Es ist ausreichend, wenn der Zentrierschieber verhindert, dass das Korn einen vorherbestimmten seitlich begrenzten Bereich verlässt.

Die Angabe "wenigstens teilweise" bedeutet in diesem Zusammenhang, dass der Zentrierschieber das Korn nicht durchgehend vom Aufnahmebereich bis zum Abgabebereich beidseitig abstützen oder führen muss. Beispielsweise kann es Zeit in Anspruch nehmen, bis sich das Korn so relativ zum Zentrierschieber ausgerichtet hat, dass eine beidseitige Abstützung oder Führung möglich ist. Während dieser Zeit kann das Korn bereits einen gewissen Weg vom Aufnahmebereich zum Abgabebereich bewegt werden. Das Korn kann aber auch entlang des gesamten Wegs beidseitig abgestützt oder geführt werden.

Der Zentrierschieber kann auch Elemente umfassen, welche das zentrierte Korn in Drehrichtung gesehen nach hinten abstützt. Die Elemente, welche die seitliche Abstützung oder Führung bewirken können zugleich auch die Abstützung nach hinten gewährleisten.

Der Zentrierschieber kann so drehbar in dem Gehäuse gelagert sein, dass er entlang einer Kreisbahn bewegbar ist, wobei das Führungselement wenigstens teilweise entlang der Kreisbahn verläuft, und wobei die Breite der Führungsfläche vom Aufnahmebereich zum Abgabebereich hin abnimmt.

Durch die abnehmende Breite der Führungsfläche können die Körner, welche nicht durch den Zentrierschieber zentriert werden, im Laufe der Bewegung vom Aufnahmebereich in den Abgabebereich aufgrund der wegfallenden Stütze durch die Führungsfläche unter Zentrifugalkrafteinflüssen und/oder Schwerkrafteinflüssen ausgesondert werden. Diese können zur erneuten Förderung in den Aufnahmebereich zurückgeführt werden, insbesondere durch Trägheit und/oder unter Schwerkrafteinfluss.

Der Zentrierschieber kann so im Gehäuse gelagert sein, dass die Kreisbahn im Betrieb der Vereinzelungsvorrichtung im Wesentlichen vertikal verläuft. Insbesondere kann die Kreisbahn mit der Senkrechten einen Winkel zwischen 0° und 10°, insbesondere zwischen 0° und 5°, einschließen.

Das Führungselement kann insbesondere radial außerhalb der Kreisbahn verlaufen. Mit anderen Worten kann das Führungselement die Kreisbahn wenigstens teilweise radial umgeben oder begrenzen. Das Führungselement kann insbesondere annähernd tangential entlang bestimmten Abschnitten der Kreisbahn verlaufen, insbesondere im Abschnitt der Kreisbahn zwischen dem Aufnahmebereich und dem Abgabebereich.

Die Kreisbahn kann insbesondere durch ein äußerstes Ende oder eine Spitze des Zentrierschiebers überstrichen werden. Mit anderen Worten kann die Kreisbahn einen Radius aufweisen, der der Länge des Zentrierschiebers entspricht. Die Länge des Zentrierschiebers kann der maximalen radialen Erstreckung des Zentrierschiebers ausgehend von der Drehachse entsprechen.

Als Aufnahmebereich kann ein Teil des Gehäuseinneren bezeichnet werden, in dem im Betrieb ein Reservoir von Körnern des Saatguts so bereitgestellt wird, dass der Zentrierschieber wenigstens eines dieser Körner aufnehmen und zum Abgabebereich hin bewegen kann.

Der Aufnahmebereich kann ein bestimmtes Kreissegment der Kreisbahn des Zentrierschiebers umfassen.

Als Abgabebereich kann ein Teil des Gehäuseinneren bezeichnet werden, in dem eine Auslassöffnung im Gehäuse angeordnet ist, über die wenigstens ein Korn des Saatguts, das vom Zentrierschieber in den Abgabebereich geschoben wurde, aus dem Gehäuse ausgebracht werden kann. Das wenigstens eine Korn kann dann an eine Abgabeeinrichtung geleitet werden, über die das wenigstens eine Korn auf einer landwirtschaftlichen Fläche abgelegt wird. Das wenigstens eine Korn kann insbesondere dem durch den Zentrierschieber zentrierten Korn entsprechen.

Als Führungsfläche des Führungselements wird hierin die für die Förderung des Saatguts vom Aufnahmebereich in den Abgabebereich wirksame Fläche des Führungselements bezeichnet. Mit anderen Worten entspricht die Führungsfläche des Führungselements der Oberfläche des Führungselements, auf der Körner des Saatguts bei der Förderung von dem Aufnahmebereich in den Abgabebereich hin bewegt werden. Aufgrund der Bewegung entlang der Kreisbahn wird das Saatgut durch Fliehkraft gegen die Führungsfläche des Führungselements gedrückt. Die Führungsfläche des Führungselements dient daher als Stütze für das Saatgut entgegen der Fliehkraft.

Wenn die Breite der Führungsfläche abnimmt geht diese Stützwirkung für bestimmte Körner des Saatguts verloren, weshalb diese nicht weiter zum Abgabebereich hin gefördert werden können, sondern ausgesondert werden.

Die Breite der Führungsfläche kann vom Aufnahmebereich zum Abgabebereich hin kontinuierlich abnehmen. Dadurch können überschüssige Körner sukzessive ausgesondert werden. Diese werden dann sukzessive an den Aufnahmebereich zurückgeführt, sodass ein ausreichendes Reservoir von Saatgut im Aufnahmebereich bereitgestellt werden kann, selbst wenn über die Zufuhrleitung temporär zu wenig Saatgut zugeführt wird. Die Breite der Führungsfläche kann jedoch auch diskontinuierlich abnehmen.

Als Breite der Führungsfläche kann insbesondere die Ausdehnung der Führungsfläche quer zur Kreisbahn bezeichnet werden. Die Richtung quer zur Kreisbahn bezeichnet hierin eine Richtung, die an jedem Punkt der Kreisbahn senkrecht zur Tangente und senkrecht zum Radius der Kreisbahn verläuft. Die Ausdehnung der Führungsfläche in dieser Richtung wird entlang der, gegebenenfalls konturierten, Führungsfläche bestimmt.

Das Führungselement kann eine Vertiefung aufweisen, in die der Zentrierschieber wenigstens teilweise eingreift, wobei die Tiefe der Vertiefung entlang der Kreisbahn des Vereinzelungsschiebers vom Aufnahmebereich zum Abgabebereich hin abnimmt. Durch die Vertiefung im Aufnahmebereich ist es möglich, dass zuverlässig Saatgut durch den Zentrierschieber aufgenommen und entlang der Führungsfläche bewegt werden kann. Durch die abnehmende Tiefe der Vertiefung entlang der Kreisbahn kann wiederum eine Aussonderung überschüssiger Körner des Saatguts bewirkt werden. Die Abnahme der Tiefe geht mit einer Abnahme der Breite der Führungsfläche einher.

Die Vertiefung im Führungselement kann insbesondere einer Nut oder Kerbe entsprechen. Die Nut oder Kerbe kann insbesondere V-förmig ausgebildet sein.

Das Führungselement kann im Abgabebereich einen in Drehrichtung verlaufenden Grat aufweisen. Durch einen solchen Grat wird eine Vereinzelung des Saatguts weiter gefördert, da entlang des Grats üblicherweise nur ein Korn stabil bewegt werden kann, nämlich das Korn, welches wenigstens teilweise durch den Zentrierschieber zentriert wird. Die vorherbestimmte Bahn entlang der Führungsfläche, entlang der der Zentrierschieber ein Korn zentriert bewegt, kann insbesondere entlang des Grats verlaufen.

Beidseitig des Führungselements kann ein Sammelraum für ausgesonderte Körner angeordnet sein.

Das Führungselement kann an einer Innenfläche des Gehäuses angeordnet sein, welche den Raum, in dem der Zentrierschieber im Betrieb rotiert, radial begrenzt. Mit anderen Worten kann das Gehäuse im Wesentlichen zylindrisch ausgebildet sein, wobei das Führungselement an der Mantelfläche des Gehäuses angeordnet ist.

Das Führungselement kann Teil der Innenfläche des Gehäuses sein. Alternativ kann das Führungselement zerstörungsfrei lösbar oder nicht zerstörungsfrei lösbar mit der Innenfläche des Gehäuses verbunden sein. Beispielsweise kann das Führungselement an das Gehäuse angeschweißt sein.

Das Führungselement und der Zentrierschieber können in einer gemeinsamen Ebene angeordnet sein, wobei das Führungselement und der Zentrierschieber bezüglich dieser Ebene symmetrisch ausgebildet sind. Die gemeinsame Ebene kann insbesondere eine Rotationsebene des Zentrierschiebers sein.

Falls das Führungselement eine Vertiefung aufweist, können die Punkte mit der größten Tiefe in der gemeinsamen Ebene liegen.

Falls das Führungselement einen Grat aufweist, kann dieser ebenfalls in der gemeinsamen Ebene liegen.

Die Vereinzelungsvorrichtung kann wenigstens einen weiteren Zentrierschieber umfassen. Dieser kann eines oder mehrere Merkmale des oben genannten Zentrierschiebers aufweisen. Insbesondere kann der wenigstens eine weitere Zentrierschieber so drehbar im Gehäuse gelagert ist, dass er entlang der Kreisbahn bewegbar ist. Mit anderen Worten kann der weitere Zentrierschieber in Umfangsrichtung versetzt zum oben beschriebenen Zentrierschieber angeordnet sein und dem oben beschriebenen Zentrierschieber nachlaufend entlang der Kreisbahn bewegbar sein.

Der Zentrierschieber und der wenigstens eine weitere Zentrierschieber können miteinander verbunden sein, insbesondere starr miteinander verbunden sein.

Der Zentrierschieber und der wenigstens eine weitere Zentrierschieber können an einer gemeinsamen rotierenden Scheibe angeordnet sein.

Der Zentrierschieber und der wenigstens eine weitere Zentrierschieber können ein die Zentrierwirkung des Zentrierschiebers erzeugendes Element aufweisen. Dieses Element kann insbesondere so ausgebildet sein, dass ein Korn des Saatguts beidseitig stützbar oder führbar ist. Das Element kann nach vorne hin offen sein. Mit anderen Worten kann eine Abstützung des Korns nach vorne hin unterbleiben.

Der Zentrierschieber kann insbesondere eine in Drehrichtung offene Nut oder Kerbe zur Aufnahme eines Korn des Saatguts umfassen. Die Nut oder Kerbe kann auch in Richtung der Führungsfläche offen sein. Die Größe der Nut kann so gewählt sein, dass sich maximal ein Korn ganz oder teilweise in der Nut anordnen kann.

Die Nut kann insbesondere konisch oder V-förmig ausgebildet sein. Die Nut kann insbesondere bezüglich der oben genannten gemeinsamen Ebene des Führungselements und des Zentrierschiebers symmetrisch ausgebildet sein. Eine korrespondierende Vertiefung im Führungselement kann ebenfalls symmetrisch bezüglich dieser Ebene ausgebildet sein. Diese Symmetrie erlaubt insbesondere ein beidseitiges Absondern von überschüssigen Körnern in den umgebenden Sammelraum.

In einer alternativen Ausführungsform kann der Zentrierschieber mehrere in Richtung des Führungselements weisende Borsten aufweisen. Wenn die Breite der Führungsfläche zum Abgabebereich hin abnimmt, werden äußere Borsten nicht mehr entlang der Führungsfläche bewegt und stellen sich infolge der Fliehkraftwirkung auf. Damit können diese Borsten ein Korn des Saatguts seitlich führen. Nachlaufende Borsten können das Korn in Drehrichtung gesehen nach hinten abstützen. Mit anderen Worten kann sich auch bei einem Borsten umfassenden Zentrierschieber eine konische oder V-förmige Zentrierfläche für ein Korn ausbilden.

Das die Zentrierwirkung des Zentrierschiebers erzeugende Element des Zentrierschiebers kann insbesondere am äußersten Ende oder an der Spitze des Zentrierschiebers angeordnet sein. Dieses Zentrierelement kann austauschbar sein. Beispielsweise kann eine die oben genannte Nut des Zentrierschiebers umfassende Spitze des Zentrierschiebers auswechselbar sein. Dadurch kann eine gewisse Anpassung oder Optimierung hinsichtlich der Korngrößen erzielt werden.

Die Vereinzelungsvorrichtung kann wenigstens ein Störelement umfassen, welches so ausgebildet ist, dass Körner des Saatguts, die nicht durch den Zentrierschieber zentriert werden unter Einfluss des Störelements ihre Lage ändern oder vom Transport zum Abgabebereich hin ausgesondert werden. Ein derartiges Störelement begünstigt das Aussonderung überschüssiger Körner und somit die Vereinzelung des Saatguts.

Das Störelement kann beispielsweise eine Druckluftdüse umfassen.

Es kann also wenigstens eine Druckluftdüse vorgesehen und so angeordnet sein, dass Druckluft auf Saatgut gerichtet werden kann, welches durch den Zentrierschieber entlang der Führungsfläche des Führungselements geschoben wird. Diese Druckluft kann eine Störung für Körner des Saatguts darstellen, welche nicht durch den Zentrierschieber zentriert geführt werden. Dadurch kann die Aussonderung von überschüssigen Körnern unterstützt werden. Dies kann auch eine zuverlässigere Vereinzelung des Saatguts ermöglichen.

Die Druckluftdüse kann in das Führungselement integriert sein, und insbesondere eine Luftausströmöffnung umfassen, die in der Führungsfläche angeordnet ist. Dadurch ist eine besonders effiziente Störung überschüssiger Körner möglich.

Alternativ oder zusätzlich ist es auch denkbar, eine mit Druckluft beaufschlagbare Scheibe vorzusehen, die gemeinsam mit dem Zentrierschieber rotiert und wenigstens eine Öffnung aufweist, die im Bereich des Zentrierschiebers angeordnet ist. Diese mitlaufende Öffnung kann in Drehrichtung gesehen insbesondere stromabwärts des Zentrierschiebers angeordnet sein, also vorlaufen.

Das Störelement kann alternativ oder zusätzlich ein geometrisches Störelement sein. Mit anderen Worten kann das wenigstens eine Störelement einer lokalen Änderung der Geometrie der Führungsfläche des Führungselements entsprechen. Insbesondere kann das wenigstens eine Störelement eine veränderte Neigung der Führungsfläche umfassen. Im Bereich des Störelements kann sich die Geometrie der Führungsfläche insbesondere diskontinuierlich ändern.

Die Erfindung stellt außerdem eine Sämaschine bereit umfassend zwei oder mehr der oben beschriebenen Vereinzelungsvorrichtungen. Insbesondere kann diese Maschine einen mit einer oder mehreren Vordosiereinheiten verbundenen Verteilkopf aufweisen.

Weist die Sämaschine einen Verteilkopf auf, dient das beschriebene Umrüst-Set der Vergleichmäßigung des vom Verteilkopf zugeführten Saatguts.

Die Erfindung stellt außerdem ein Verfahren zum Betreiben einer Sämaschine bereit, wobei die Sämaschine wenigstens eine Vereinzelungsvorrichtung umfasst, wobei die Vereinzelungsvorrichtung eine in einem Gehäuse drehbar gelagerte Fördereinrichtung umfasst, die mit einem Führungselement so zusammenwirkt, dass granulares Material von einem Aufnahmebereich in einen Abgabebereich förderbar ist, wobei die Vereinzelungsvorrichtung eine Vordosiereinheit umfasst, die über eine Seitenwand des Gehäuses in das Gehäuse mündet, wobei mit der Vordosiereinheit granulares Material in das Gehäuse eingebracht werden kann, das Verfahren umfassend:
Austauschen der Fördereinrichtung durch eine Vergleichmäßigungsscheibe eines oben beschriebenen Umrüst-Sets; und
Anordnen eines Wandeinsatzes eines oben beschriebenen Umrüst-Sets im Gehäuse der Vereinzelungsvorrichtung, so dass der Wandeinsatz mit der Vergleichmäßigungsscheibe und Teilen der Seitenwand des Gehäuses, über welche die Vordosiereinheit in das Gehäuse mündet, einen Vergleichmäßigungsraum bildet, in den mit der Vordosiereinheit granulares Material eingebracht werden kann.

Die Vordosiereinheit kann ein drehbar gelagertes Element aufweisen, an dem Mitnehmer einer Vordosierkammer, angeordnet sind. Die Vordosierkammer kann dabei dem Vergleichmäßigungsraum vorgeschaltet sein. Mit anderen Worten kann granulares Material aus der Vordosierkammer in den Vergleichmäßigungsraum eingebracht werden. Die Sämaschine kann einen mit der Vordosiereinheit verbundenen Verteilkopf aufweisen. In diesem Fall kann das Verfahren außerdem ein Entfernen des drehbar gelagerten Elements umfassen. Da in diesem Falle der Verteilkopf eine volumetrische Vordosierung durchführt, kann auf die Vordosierung in der Vordosiereinheit verzichtet werden.

Die oben beschriebenen Lösungen sehen vor, die vorhandenen Vereinzelungsvorrichtungen einer Sämaschine mit Hilfe der Umrüst-Sets so umzubauen, dass sie als Vergleichmäßigungsvorrichtungen arbeiten. Es ist aber auch denkbar, die Vereinzelungsvorrichtungen, also die Vereinzelungsgehäuse mit darin angeordneten Elementen, komplett auszutauschen und gegen entsprechende Vergleichmäßigungsvorrichtungen zu ersetzen. Ein dementsprechendes Umrüst-Set entspricht einer Vergleichmäßigungsvorrichtung.

Die Vergleichmäßigungsscheibe, der Vergleichmäßigungsraum und dessen Wandung, ein gegebenenfalls vorhandener Sammelraum und eine gegebenenfalls vorhandene Vordosiereinheit können jeweils eines oder mehrere der oben beschriebenen Merkmale aufweisen. Mit anderen Worten kann das vorgenannte Umrüst-Set so ausgebildet sein, dass es strukturell und funktionell mit einer oben beschriebenen Vereinzelungsvorrichtung übereinstimmt, in deren Gehäuse ein oben beschriebenes Umrüst-Set mit Vergleichmäßigungsscheibe und Wandeinsatz angeordnet ist. Auf das Führungselement der Vereinzelungsvorrichtung kann jedoch beim vorgenannten Umrüst-Set verzichtet werden.

Das vorgenannte Umrüst-Set kann eine oben beschriebene Vordosiereinheit umfassen, die über eine Seitenwand des Gehäuses in das Gehäuse mündet. Wenn das Umrüst-Set mit einem Verteilerkopf verbunden und betrieben werden soll, kann aber auch keine Vordosiereinheit vorgesehen sein.

Die Offenbarung stellt außerdem eine Sämaschine bereit umfassend zwei oder mehr der vorgenannten Umrüst-Sets.

Die Offenbarung stellt außerdem ein nicht beanspruchtes Verfahren zum Betreiben einer Sämaschine bereit, wobei die Sämaschine wenigstens eine Vereinzelungsvorrichtung umfasst, wobei die Vereinzelungsvorrichtung eine in einem Gehäuse drehbar gelagerte Fördereinrichtung umfasst, die mit einem Führungselement so zusammenwirkt, dass granulares Material von einem Aufnahmebereich in einen Abgabebereich förderbar ist, wobei die Vereinzelungsvorrichtung eine Vordosiereinheit umfasst, die über eine Seitenwand des Gehäuses in das Gehäuse mündet, wobei mit der Vordosiereinheit granulares Material in das Gehäuse eingebracht werden kann, das Verfahren umfassend:
Austauschen der wenigstens einen Vereinzelungsvorrichtung durch ein vorgenanntes Umrüst-Set. Entsprechend dieses Verfahrens wird die wenigstens eine Vereinzelungsvorrichtung, also das Vereinzelungsgehäuse mit darin angeordneten Elementen, komplett ausgetauscht und gegen eine entsprechende Vergleichmäßigungsvorrichtung ersetzt.

Weitere Merkmale und Vorteile der Erfindung werden nachfolgend anhand der beispielhaften Figuren erläutert. Dabei zeigt:
- Figur 1: eine Außenansicht einer beispielhaften Vereinzelungsvorrichtung;
- Figur 2: einen Schnitt durch eine beispielhafte Vereinzelungsvorrichtungen mit darin angeordnetem Umrüst-Set;
- Figur 3: einen Schnitt durch einen Teil der beispielhaften Vereinzelungsvorrichtung nach Figur 2;
- Figur 4: einen Schnitt durch einen weiteren Teil der beispielhaften Vereinzelungsvorrichtung nach Figur 2;
- Figur 5: einen Schnitt durch eine beispielhafte Vereinzelungsvorrichtung mit einem alternativen eingesetzten Umrüst-Set;
- Figur 6: eine perspektivische Ansicht von Teilen der in Figur 5 gezeigten Elemente;
- Figur 7: einen Schnitt durch eine beispielhafte Vereinzelungsvorrichtung mit einem eingesetzten alternativen Umrüst-Set;
- Figur 8: eine perspektivische Detailansicht von Teilen der Elemente der Vereinzelungsvorrichtung der Figur 7; Figur 9 eine Illustration der Vergleichmäßigung von granularem Material mit einer Vereinzelungsvorrichtung mit eingebautem Umrüst-Set gemäß Figur 2; Und
- Figur 10: ein Beispiel einer eine Vereinzelungsvorrichtung ersetzenden Verg leichmäßigungsvorrichtung.

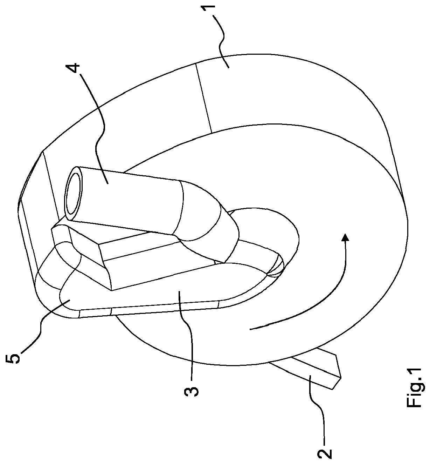

Figur 1 zeigt eine Außenansicht einer beispielhaften Vereinzelungsvorrichtung umfassend ein Gehäuse 1, aus dem das granulare Material, insbesondere Saatgut, über einen Abgabekanal 2 ausgebracht werden kann. Das granulare Material wird zuvor über eine Vordosiereinheit 3 in das Gehäuse 1 eingebracht. Zur Vordosiereinheit 3 gelangt das granulare Material über eine Saatgutzuführleitung 4, beispielsweise aus einem zentralen Vorratsbehälter über pneumatische Förderung. Schließlich zeigt Figur 1 noch einen Rückführkanal 5, der die Vordosiereinheit 3 mit dem Inneren des Gehäuses 1 verbindet, und über den granulares Material aus dem Gehäuse 1 ausgeschleust und erneut der Vordosiereinheit 3 zugeführt werden kann.

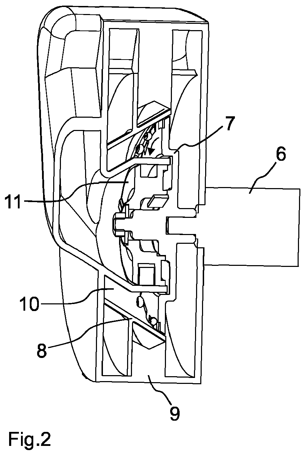

Figur 2 zeigt einen Schnitt durch die beispielhafte Vereinzelungsvorrichtung der Figur 1, wobei bereits ein erfindungsgemäßes Umrüst-Set in das Gehäuse eingebaut wurde. Insbesondere ist im Gehäuse 1 anstelle der eigentlich vorgesehenen Fördereinrichtung eine Vergleichmäßigungsscheibe 7 angeordnet. Diese ist über eine Steckverbindung mit dem Antriebsmotor 6 verbunden. Außerdem ist im Gehäuse 1 einen Wandeinsatz 8 vorgesehen, der das Führungselement 9 abdeckt, welches eigentlich zur Vereinzelung Verwendung findet. Man erkennt, dass durch den Wandeinsatz 8 eine radiale Wandung eines Vergleichmäßigungsraums 10 geschaffen wird, der sich zwischen der Vergleichmäßigungsscheibe 7 und einer seitlichen Wandung des Gehäuses 1, über welche die Vordosiereinheit 3 in das Gehäuse 1 mündet, erstreckt. Da Teile der Wandung der Vordosiereinheit 3 in das Innere des Gehäuses 1 gezogen sind, wird der Vergleichmäßigungsraum 10 auch teilweise durch eine Wandung der Vordosiereinheit 3 begrenzt, und zwar radial zur Drehachse der Vergleichmäßigungsscheibe 7 hin.

Die Vordosiereinheit 3 umfasst ein drehbar gelagertes Element 11 in Form einer Scheibe, an dem Mitnehmer angeordnet sind, welche das granulare Material in eine Drehbewegung versetzen. Über seitliche Öffnungen in der Scheibe gelangen die Körner dann in eine Vordosierkammer, in welcher wiederum Mitnehmer angeordnet sind, welche mit dem Element 11 verbunden sind und welche die Körner des granularen Materials in Drehrichtung beschleunigen. Über eine Öffnung in der radialen Wandung der Vordosiereinheit 3 gelangen die Körner dann in den Vergleichmäßigungsraum 10.

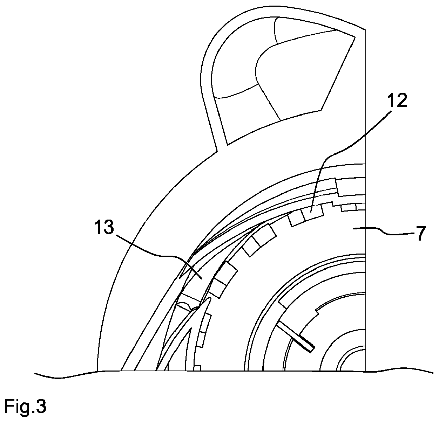

Die Vergleichmäßigungsscheibe 7 ist in diesem Ausführungsbeispiel starr ausgebildet und umfasst mehrere Ausnehmungen in Form von Sacklöchern 12 (siehe Figur 3). Durch diese Sacklöcher 12 werden Mitnahmetaschen gebildet, in welchen die Körner des granularen Materials in Drehrichtung der Vergleichmäßigungsscheibe 7 mitbewegt werden. Die portionsweise in den Vergleichmäßigungsraum eindosierten Körner treffen also auf die radiale Wandung des Vergleichmäßigungsraums 10, welche durch Teile des Wandeinsatzes 8 gebildet wird, und werden durch die sich zur Verg leichmäßigungsscheibe 7 erweiternde Form der radialen Wandung des Vergleichmäßigungsraums 10 zur Vergleichmäßigungsscheibe 7 hingedrängt. Bei hohen Geschwindigkeitsunterschieden von Vergleichmäßigungsscheibe 7 und Korn kann das Korn zunächst von der Vergleichmäßigungsscheibe 7 abprallen, wird aber über den sich zur Vergleichmäßigungsscheibe 7 hin öffnenden Abschnitt der radialen Wandung wieder zu dieser hingedrängt. Durch das Wechselspiel aus Mitnehmen, Abprallen, Zurückdrängen und der Interaktion mit anderen Körnern kommt es zu einer Auflösung der aus Vordosiereinheit 3 zugeführten Körnerpakete und damit zu einer zufälligen Verteilung der Körner.

Bei diesem Ausführungsbeispiel werden alle von der Vordosiereinheit 3 in den Vergleichmäßigungsraum 10 eingebrachten Körner auch über den tangentialen Auslass 13 und den anschließenden Abgabekanal 2 aus dem Gehäuse 1 ausgeschleust und den Abgabeelementen, beispielsweise den Säscharen, zugeführt.

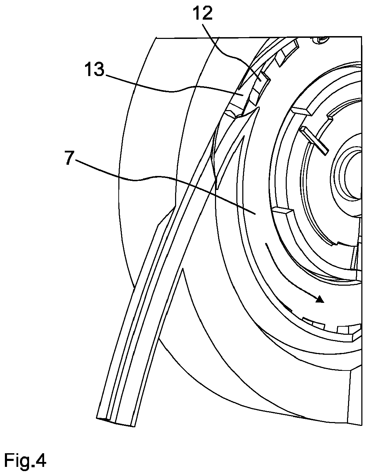

In Figur 4 ist zu erkennen, dass sich die in den Vergleichmäßigungsraum 10 führende Öffnung des tangentialen Auslasses 13 in axialer Richtung kontinuierlich schließt (in Drehrichtung gesehen), um Klemmsituationen zu vermeiden.

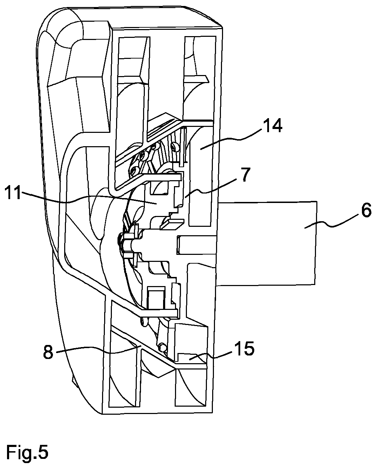

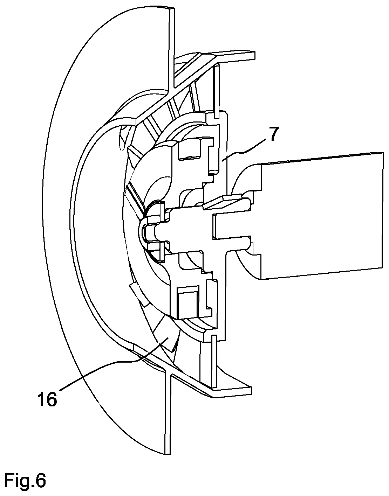

Figur 5 zeigt einen Schnitt durch das Gehäuse einer Vereinzelungsvorrichtung, jedoch mit einer alternativen Ausführung des eingebauten Umrüst-Sets. In diesem Fall wird anstelle einer starren Vergleichmäßigungsscheibe wie in den Figuren 2 bis 4 gezeigt, eine Vergleichmäßigungsscheibe 7 mit flexiblen, zueinander beabstandeten Mitnehmern 16 (siehe auch Figur 6) verwendet. Diese flexiblen Mitnehmer 16 sind schräg zur Drehrichtung angeordnet, und zwar derart, dass die Vorderseite der Mitnehmer 16 jeweils zum Vergleichmäßigungsraum hinweist. Die flexiblen Mitnehmer 16 sind also in einem Winkel größer 0° und kleiner 90° zur Drehrichtung bzw. zur Scheibenebene der Vergleichmäßigungsscheibe 7 angeordnet, so dass die Saatkörner bei Kontakt mit den Mitnehmern 16 sowohl einen Mitnahmeimpuls in Drehrichtung als auch einen Impuls von der Scheibe weg erfahren. So kommt es wie im vorigen Ausführungsbeispiel zu einer Vergleichmäßigung der gruppenweise zugeführten Saatgutkörner.

Die Flexibilität der Mitnehmer 16 ist von Vorteil, da dadurch Beschädigungen der Saatgutkörner vermieden werden können, falls sich Körner zwischen den Mitnehmern 16 und der radialen Wandung des Vergleichmäßigungsraums anordnen. Dies kann beispielsweise bei der Verwendung von feinen Sämereien (beispielsweise Kleesamen, Grassamen) der Fall sein, da diese sehr kleine Dimensionen aufweisen. Wollte man die Ausführungsform der Figuren 2 bis 4 für solche feinen Sämereien verwenden, wären sehr kleine Spaltmaße erforderlich, also eine sehr geringe Distanz zwischen dem Rand der Vergleichmäßigungsscheibe 7 und der radialen Wandung des Vergleichmäßigungsraumes. Um solche kleinen Spaltmaße verwirklichen zu können, sind aufwendige und damit teure Fertigungsverfahren nötig. Für solche feinen Sämereien ist somit die Ausführungsform der Figuren 5 und 6 vorteilhaft.

Aufgrund der Schrägstellung der flexiblen Mitnehmer 16 erhalten die Saatgutkörner einen Impuls von der Vergleichmäßigungsscheibe 7 weg in Richtung des Vergleichmäßigungsraums 10. Innerhalb des Vergleichmäßigungsraums bildet sich eine gleichmäßige Verteilung der Saatgutkörner aus.

Aufgrund der Abstände zwischen den Mitnehmern 16 kann das Saatgut in einen Sammelraum 14 gelangen, der zwischen der Vergleichmäßigungsscheibe 7 und der Seitenwand des Gehäuses 1 angeordnet ist, die der Seitenwand, über die die Vordosiereinheit 3 in das Gehäuse mündet, gegenüber liegt. Wie aus den Figuren 5 und 6 ersichtlich, erstreckt sich der Wandeinsatz in diesem Ausführungsbeispiel daher auf die Seite der Vergleichmäßigungsscheibe 7, welche dem Vergleichmäßigungsraum 10 gegenüberliegt. Ein Abschnitt 15 des Wandeinsatzes 8 bildet somit eine radiale Wandung des Sammelraums 14.

Innerhalb des Sammelsraums 14 bilden sich aufgrund der Rotationsbewegung der Vergleichmäßigungsscheibe 7 Luftverwirbelungen. Durch die Luftverwirbelungen und/oder die Schrägstellung der flexiblen Mitnehmer 16 werden die in dem Sammelraum 14 befindlichen Saatgutkörner aus dem Sammelraum 14 zurück in den Vergleichmäßigungsraum befördert.

Alternativ können die Mitnehmer 16 derart ausgeformt sein, dass sie die in dem Sammelraum 14 befindlichen Saatgutkörner in den Vergleichmäßigungsraum befördern.

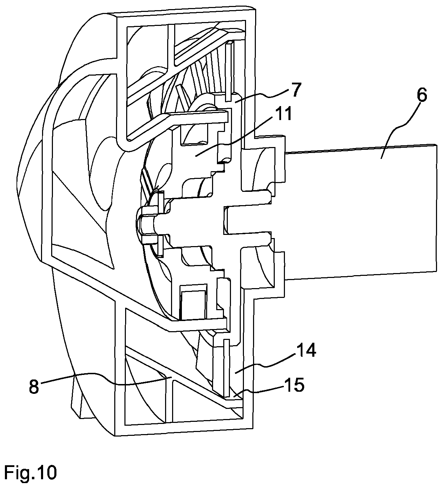

Alternativ oder zusätzlich ist der Sammelraum 14 möglichst klein ausgeführt. Bevorzugt ist die axiale Erstreckung des Sammelraumes 14 geringer als 16 mm. Ist eine Vereizelungsvorrichtung vollständig gegen eine Vergleichmäßigungsvorrichtung, wie sie beispielhaft in Fig. 10 gezeigt ist, ausgestauscht, kann die axiale Erstreckung des Sammelraumes 14 zumindest annähernd null sein.

Die Aussaatmenge kann hauptsächlich über die Motordrehzahl des Antriebsmotors 6 und im Ausführungsbeispiel der Figuren 2 bis 4 durch die Größe der seitlichen Öffnungen der Scheibe, die Größe der Vordosierkammern sowie deren Anzahl bestimmt werden. Für sehr kleine Massenströme, die bei der Kombination von sehr kleinen Aussaatmengen, geringen Reihenweiten und langsamen Fahrgeschwindigkeiten auftreten können, kann es jedoch sein, dass die Vordosierung mit selbst nur einer Mitnahmetasche schon eine zu große Menge liefert. Auch die Motordrehzahl kann nicht beliebig gesenkt werden, da eine gewisse Mindestdrehzahl erforderlich ist, damit die Vordosierung bzw. Vergleichmäßigung korrekt funktioniert. Auch die Größe der Mitnahmetaschen der Ausführungsform in Figuren 2 bis 4 kann nicht beliebig verkleinert werden, da die auszudosierende Menge pro Umdrehung unter Umständen geringer ist als eine Taschenfüllung. Beispielsweise wäre es denkbar, dass ein Massenstrom ausdosiert werden soll, dem nur 0,5 Körner pro Umdrehung entspricht (beispielsweise für Mais). Die Mitnahmetaschen können nur so weit verkleinert werden, dass mindestens ein Korn aufgenommen wird. Folglich würde im Falle der oben beschriebenen Ausführungsformen wenigstens das Doppelte von dem ausdosiert werden, was eigentlich gewünscht ist.

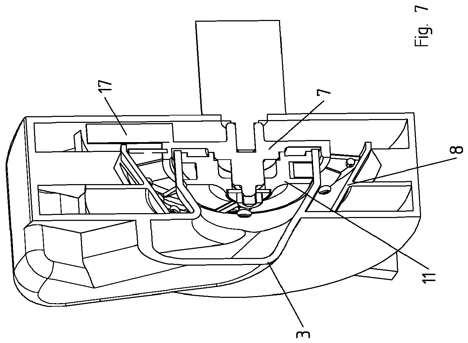

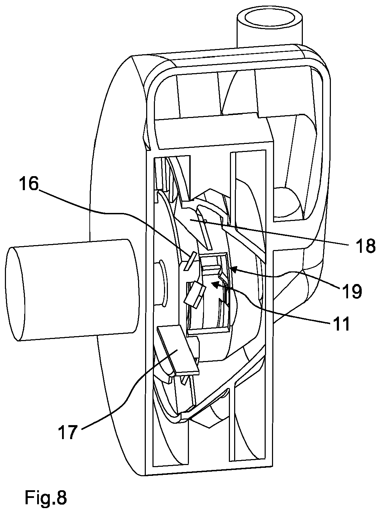

Entsprechend sieht die Ausführungsform, die in den Figuren 7 und 8 illustriert wird vor, dass nicht die gesamte Körnermenge, die über die Vordosiereinheit 3 in den Vergleichmäßigungsraum eindosiert wird auch unmittelbar ausgegeben wird. Stattdessen wird ein Teil der eindosierten Saatgutmenge über den in Figur 1 gezeigten Rückführkanal 5 erneut der Vordosiereinheit 3 zugefügt.

Dafür bildet der Sammelraum, der sich auf der dem Verg leichmäßigungsraum abgewandten Seite der Vergleichmäßigungsscheibe 7 befindet, keinen abgeschlossenen Raum, sondern einen Bereich, der über einen Rückführkanal 5 mit der Vordosiereinheit 3 oder einem der Vordosiereinheit vorgeschalteten Sammelbehälter verbunden ist. Um die überschüssigen Saatgutkörner in den Rückführkanal 5 zu bewegen, ist wie in Figur 7 gezeigt ein Mitnehmer 17 vorgesehen, der mit der Vergleichmäßigungsscheibe 7 verbunden ist und somit um die Drehachse der Vergleichmäßigungsscheibe 7 rotiert. Dabei überstreicht der Mitnehmer 17 den Sammelraum und schiebt darin angeordnete Körner gewissermaßen in den Rückführkanal 5. Die Ausführungsform, in der der Mitnehmer 17 mit der Vergleichmäßigungsscheibe 7 verbunden ist, ist aufgrund ihrer Einfachheit vorteilhaft. Es ist jedoch auch möglich, dass der Mitnehmer 17 getrennt von der Vergleich mäßigungsscheibe im Sammelraum drehbar gelagert und durch einen Antrieb bewegbar ist. Der Mitnehmer 17 kann wiederum flexibel ausgebildet sein, um Beschädigungen des Saatguts zu minimieren.

Im Gegensatz zur Ausführungsform der Figuren 5 und 6 erstreckt sich der Wandeinsatz 8 in diesem Beispiel nicht oder nicht vollständig in den Sammelraum, so dass die radiale Wandung des Sammelraums in diesem Beispiel durch Teile des Gehäuses 1 der Vereinzelungsvorrichtung gebildet wird.

Wie in Figur 8 gezeigt können in diesem Fall auch Mitnehmer 18 vorgesehen sein, die im Winkel genau andersherum angestellt sind als die flexiblen Mitnehmer 16 und damit aktiv Körner aus dem Vergleichmäßigungsraum heraus bewegen können. Auch könnte der oder die Mitnehmer 18 eine Abgabeöffnung 19 der Vordosiereinheit 3 in axialer Richtung überstreichen, beispielsweise zur Hälfte wie in Figur 8 gezeigt, und damit Teile der abgegebenen Körner auf direktem Weg in den Sammelbereich leiten.

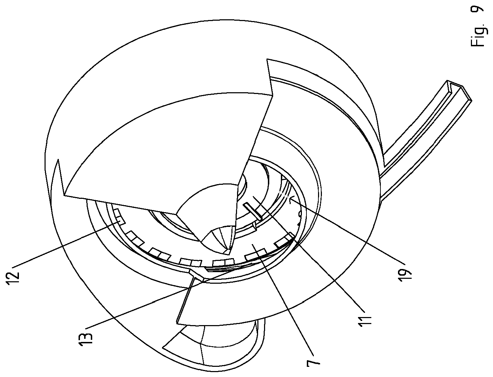

Figur 9 zeigt schließlich noch eine Illustration des Vergleichmäßigungsprozesses mit einer Ausführungsform gemäß den Figuren 2 bis 4. Es wird eine Gruppe von Saatgutkörnern durch eine radiale Abgabeöffnung 19 aus einer Vordosierkammer der Vordosiereinheit in den Vergleichmäßigungsraum eingebracht. Zu sehen ist ein Element 11, welches Mitnehmer aufweist, die die Körner in der Vordosierkammer in Drehrichtung beschleunigen. Die im Vergleichmäßigungsraum befindlichen Körner lagern sich zum Teil in den Mitnahmetaschen 12 an, prallen zum Teil von der Verg leichmäßigungsscheibe 7 ab, werden jedoch durch die konische Form der radialen Wandung des Verg leichmäßigungsraums wieder zur Vergleichmäßigungsscheibe 7 hingeleitet. Im Bereich der Öffnung 13 werden die Körner dann vergleich-mäßigt aus dem Vergleichmäßigungsraum und in Folge aus dem Gehäuse der Vereinzelungsvorrichtung ausgeschleust.

Wenn die Vereinzelungsvorrichtung über einen Verteilerkopf mit granularem Material gespeist wird, kann das Element 11 der Vordosiereinheit auch entfernt werden. Die Aufgabe der volumetrischen Vordosierung wird dann durch den Verteilerkopf übernommen.

In Figur 9 ist auch nochmals zu erkennen, wie sich die Öffnung 13 kontinuierlich in Drehrichtung schließt, so dass Verklemmungen von Körnern weitestgehend vermieden werden können.

Es versteht sich, dass in den zuvor beschriebenen Ausführungsbeispielen genannte Merkmale nicht auf diese speziellen Kombinationen beschränkt und auch in beliebigen anderen Kombinationen im Rahmen des durch die Patentansprüche definierten Schutzumfangs möglich sind. Insbesondere ist die Geometrie und relative Anordnung der Teile zueinander nicht auf die gezeigten Ausführungsformen beschränkt.

## Patentansprüche

1. Vereinzelungsvorrichtung für granulares Material, insbesondere Saatgut, umfassend ein Gehäuse (1) und ein darin angeordnetes Umrüst-Set für eine Vereinzelungsvorrichtung für granulares Material, insbesondere Saatgut, wobei die Vereinzelungsvorrichtung eine in dem Gehäuse (1) drehbar gelagerte Fördereinrichtung umfasst, die mit einem Führungselement (9) so zusammenwirkt, dass granulares Material von einem Aufnahmebereich in einen Abgabebereich förderbar ist,
wobei die Vereinzelungsvorrichtung eine Vordosiereinheit (3) umfasst, die über eine Seitenwand des Gehäuses (1) in das Gehäuse (1) mündet;
wobei mit der Vordosiereinheit (3) granulares Material in das Gehäuse (1) eingebracht werden kann; und
wobei das Umrüst-Set folgendes umfasst:
eine Vergleichmäßigungsscheibe (7), welche anstelle der Fördereinrichtung im Gehäuse positionierbar ist; **gekennzeichnet durch** einen Wandeinsatz (8), der so im Gehäuse (1) anordenbar ist, dass er mit der Vergleichmäßigungsscheibe (7) und Teilen der Seitenwand des Gehäuses, über welche die Vordosiereinheit (3) in das Gehäuse mündet, einen Vergleichmäßigungsraum (10) bildet, in den mit der Vordosiereinheit (3) granulares Material eingebracht werden kann;
wobei der Wandeinsatz (8) so ausgebildet ist, dass sich die durch den Wandeinsatz (8) gebildete radiale Wandung des Vergleichmäßigungsraums (10) wenigstens abschnittsweise zur Vergleichmäßigungsscheibe (7) hin erweitert; und
wobei der Wandeinsatz (8) so ausgebildet ist, dass die durch den Wandeinsatz (8) gebildete radiale Wandung das Führungselement (9) zum Inneren des Vergleichmäßigungsraums (10) hin abdeckt.

2. Vereinzelungsvorrichtung nach Anspruch 1, wobei der Wandeinsatz (8) einen tangentialen Auslass (13) aufweist, der in den Abgabekanal (2) des Gehäuses (1), insbesondere fluchtend, mündet, wenn der Wandeinsatz (8) im Gehäuse angeordnet ist.

3. Vereinzelungsvorrichtung nach Anspruch 1 oder 2, wobei die Vergleichmäßigungsscheibe (7) entlang ihres Umfangs ein oder mehrere Ausnehmungen (12) umfasst, durch die Mitnahmetaschen für das granulare Material gebildet werden.

4. Vereinzelungsvorrichtung nach Anspruch 3, wobei die Vergleichmäßigungsscheibe (7) starr ausgebildet ist.

5. Vereinzelungsvorrichtung nach Anspruch 1 oder 2, wobei die Vergleichmäßigungsscheibe (7) einen oder mehrere flexible Mitnehmer (16) aufweist, die schräg zur Drehrichtung der Vergleichmäßigungsscheibe (7) angeordnet sind, so dass deren in Drehrichtung vordere Seite jeweils zum Vergleichmäßigungsraum (10) hin weist.

6. Vereinzelungsvorrichtung nach Anspruch 5, wobei der Wandeinsatz (8) so im Gehäuse (1) anordenbar ist, dass zwischen der Vergleichmäßigungsscheibe (7) und der Seitenwand des Gehäuses (1), welche der Seitenwand über welche die Vordosiereinheit (3) in das Gehäuse (1) mündet, gegenüberliegt, ein Sammelraum (14) gebildet wird, der radial durch einen Teil (15) des Wandeinsatzes (8) begrenzt wird.

7. Vereinzelungsvorrichtung nach einem der Ansprüche 5 oder 6, wobei der Wandeinsatz (8) so im Gehäuse (1) anordenbar ist, dass zwischen der Vergleichmäßigungsscheibe (7) und der Seitenwand des Gehäuses, welche der Seitenwand über welche die Vordosiereinheit (3) in das Gehäuse mündet, gegenüberliegt, ein Sammelraum (14) gebildet wird, in dem wenigstens ein Mitnehmer (17) drehbar angeordnet ist, um im Sammelraum (14) angeordnete Körner über einen Rückführkanal (5) aus dem Gehäuse auszuschleusen und erneut der Vordosiereinheit (3) zuzuführen.

8. Vereinzelungsvorrichtung nach Anspruch 7, wobei an der Vergleichmäßigungsscheibe (7) ein oder mehrere flexible Mitnehmer (18) angeordnet sind, die schräg zur Drehrichtung der Vergleichmäßigungsscheibe (7) angeordnet sind, so dass deren in Drehrichtung vordere Seite jeweils vom Vergleichmäßigungsraum (10) weg und zum Sammelraum (14) hin weist.

9. Vereinzelungsvorrichtung nach Anspruch 8, wobei die Vordosiereinheit (3) eine Abgabeöffnung (19) aufweist, die radial in den Vergleichmäßigungsraum (19) mündet, und wobei ein oder mehrere der flexiblen Mitnehmer (18), deren in Drehrichtung vordere Seite jeweils vom Vergleichmäßigungsraum (10) weg und zum Sammelraum (14) hin weist, so ausgebildet sind, dass sie teilweise die Abgabeöffnung (19) überstreichen und so aus der Abgabeöffnung (19) austretende Körner des granularen Materials direkt in den Sammelraum (14) leiten.

10. Sämaschine umfassend zwei oder mehr Vereinzelungsvorrichtungen nach einem der vorangegangenen Ansprüche, außerdem umfassend einen mit der Vordosiereinheit verbundenen Verteilkopf.

11. Verfahren zum Betreiben einer Sämaschine, wobei die Sämaschine wenigstens eine Vereinzelungsvorrichtung nach einem der Ansprüche 1-9 umfasst, wobei die Vereinzelungsvorrichtung eine in einem Gehäuse (1) drehbar gelagerte Fördereinrichtung umfasst, die mit einem Führungselement (9) so zusammenwirkt, dass granulares Material von einem Aufnahmebereich in einen Abgabebereich förderbar ist, wobei die Vereinzelungsvorrichtung eine Vordosiereinheit (3) umfasst, die über eine Seitenwand des Gehäuses in das Gehäuse mündet, wobei mit der Vordosiereinheit granulares Material in das Gehäuse eingebracht werden kann, das Verfahren umfassend:
Austauschen der Fördereinrichtung durch die Vergleichmäßigungsscheibe (7) des Umrüst-Sets; **gekennzeichnet durch** das Anordnen des Wandeinsatzes (8) des Umrüst-Sets im Gehäuse der Vereinzelungsvorrichtung, so dass der Wandeinsatz mit der Vergleichmäßigungsscheibe und Teilen der Seitenwand des Gehäuses, über welche die Vordosiereinheit in das Gehäuse mündet, einen Vergleichmäßigungsraum (10) bildet, in den mit der Vordosiereinheit granulares Material eingebracht werden kann.

## Claims

1. Separating device for granular material, in particular seeds, comprising a housing (1) and a retrofit set arranged therein for a separating device for granular material, in particular seeds, wherein the separating device comprises a conveyor which is mounted rotatably in the housing (1) and interacts with a guide element (9) in such a manner that granular material can be conveyed from a receiving region into a discharging region,
wherein the separating device comprises a pre-metering unit (3) which opens into the housing (1) via a side wall of the housing (1);
wherein granular material can be introduced by the pre-metering unit (3) into the housing (1); and
wherein the retrofit set comprises the following:
a homogenizing disc (7) which can be positioned instead of the conveyor in the housing;
**characterized by**
a wall insert (8) which can be arranged in the housing (1) in such a manner that said wall insert together with the homogenizing disc (7) and parts of the side wall of the housing, via which the pre-metering unit (3) opens into the housing, forms a homogenizing chamber (10) into which granular material can be introduced by the pre-metering unit (3);
wherein the wall insert (8) is designed in such a manner that the radial wall of the homogenizing chamber (10), which radial wall is formed by the wall insert (8), is extended at least in sections towards the homogenizing disc (7); and
wherein the wall insert (8) is designed in such a manner that the radial wall formed by the wall insert (8) covers the guide element (9) towards the interior of the homogenizing chamber (10).

2. Separating device according to Claim 1, wherein the wall insert (8) has a tangential outlet (13) which opens into the discharging channel (2) of the housing (1), in particular in alignment therewith, when the wall insert (8) is arranged in the housing.

3. Separating device according to Claim 1 or 2, wherein the homogenizing disc (7) comprises one or more recesses (12) along its circumference, by means of which carry-along pockets for the granular material are formed.

4. Separating device according to Claim 3, wherein the homogenizing disc (7) is rigid.

5. Separating device according to Claim 1 or 2, wherein the homogenizing disc (7) has one or more flexible drivers (16) which are arranged obliquely with respect to the direction of rotation of the homogenizing disc (7) such that the front side of said drivers in the direction of rotation in each case faces towards the homogenizing chamber (10).

6. Separating device according to Claim 5, wherein the wall insert (8) can be arranged in the housing (1) in such a manner that, between the homogenizing disc (7) and that side wall of the housing (1) which lies opposite the side wall via which the pre-metering unit (3) opens into the housing (1), a collecting chamber (14) is formed which is bounded radially by a part (15) of the wall insert (8).

7. Separating device according to either of Claims 5 and 6, wherein the wall insert (8) can be arranged in the housing (1) in such a manner that, between the homogenizing disc (7) and that side wall of the housing which lies opposite the side wall via which the pre-metering unit (3) opens into the housing, a collecting chamber (14) is formed in which at least one driver (17) is arranged rotatably in order to sluice out grains disposed in the collecting chamber (14) from the housing via a return channel (5) and to resupply them to the pre-metering unit (3).

8. Separating device according to Claim 7, wherein one or more flexible drivers (18) are arranged on the homogenizing disc (7), said drivers being arranged obliquely with respect to the direction of rotation of the homogenizing disc (7) such that the front side of said drivers in the direction of rotation in each case faces away from the homogenizing chamber (10) and towards the collecting chamber (14).

9. Separating device according to Claim 8, wherein the pre-metering unit (3) has a discharging opening (19) which opens radially into the homogenizing chamber (19), and wherein one or more of the flexible drivers (18), the front side of which drivers in the direction of rotation in each case faces away from the homogenizing chamber (10) and towards the collecting chamber (14), are designed in such a manner that they sweep partially over the discharging opening (19) and thus conduct grains of the granular material emerging from the discharging opening (19) directly into the collecting chamber (14).

10. Seeder comprising two or more separating devices according to one of the preceding claims, also comprising a distribution head which is connected to the pre-metering unit.

11. Method for operating a seeder, wherein the seeder comprises at least one separating device according to one of Claims 1-9, wherein the separating device comprises a conveyor which is mounted rotatably in a housing (1) and interacts with a guide element (9) in such a manner that granular material can be conveyed from a receiving region into a discharging region, wherein the separating device comprises a pre-metering unit (3) which opens into the housing via a side wall of the housing, wherein granular material can be introduced by the pre-metering unit into the housing, the method comprising:
exchanging the conveyor for the homogenizing disc (7) of the retrofit set; **characterized by** arranging the wall insert (8) of the retrofit set in the housing of the separating device such that the wall insert together with the homogenizing disc and parts of the side wall of the housing, via which the pre-metering unit opens into the housing, forms a homogenizing chamber (10) into which granular material can be introduced by the pre-metering unit.

## Revendications

1. Dispositif de séparation pour des matières granulaires, en particulier des semences, comprenant un boîtier (1) et un kit de conversion disposé dans celui-ci pour un dispositif de séparation pour des matières granulaires, en particulier des semences, dans lequel le dispositif de séparation comprend un dispositif de transport monté en rotation dans le boîtier (1) et coopérant avec un élément de guidage (9) de telle sorte que des matières granulaires peuvent être transportées d'une zone de réception à une zone de distribution, dans lequel le dispositif de séparation comprend une unité de pré-dosage (3) débouchant sur le boîtier (1) par une paroi latérale du boîtier (1) ;
l'unité de pré-dosage (3) permettant d'introduire des matières granulaires dans le boîtier (1) ; et
le kit de conversion comprenant :
un disque d'homogénéisation (7) pouvant être positionné dans le boîtier au lieu du dispositif de transport ;
**caractérisé par** un insert de paroi (8) pouvant être disposé dans le boîtier (1) de telle sorte qu'il forme avec le disque d'homogénéisation (7) et des parties de la paroi latérale du boîtier par laquelle l'unité de pré-dosage (3) débouche sur le boîtier un espace d'homogénéisation (10) dans lequel l'unité de pré-dosage (3) permet d'introduire des matières granulaires ;
l'insert de paroi (8) étant réalisé de telle sorte que la paroi radiale de l'espace d'homogénéisation (10), formée par l'insert de paroi (8), s'élargit au moins par endroits en direction du disque d'homogénéisation (7) ; et
l'insert de paroi (8) étant réalisé de telle sorte que la paroi radiale formée par l'insert de paroi (8) recouvre l'élément de guidage (9) vers l'intérieur de l'espace d'homogénéisation (10).

2. Dispositif de séparation selon la revendication 1, dans lequel l'insert de paroi (8) présente une sortie tangentielle (13) débouchant sur le canal de distribution (2) du boîtier (1), en particulier en alignement, lorsque l'insert de paroi (8) est disposé dans le boîtier.

3. Dispositif de séparation selon la revendication 1 ou 2, dans lequel le disque d'homogénéisation (7) comprend le long de sa circonférence un ou plusieurs creux (12) qui forment des poches d'entraînement pour les matières granulaires.

4. Dispositif de séparation selon la revendication 3, dans lequel le disque d'homogénéisation (7) est réalisé de manière rigide.

5. Dispositif de séparation selon la revendication 1 ou 2, dans lequel le disque d'homogénéisation (7) présente un ou plusieurs taquets flexibles (16) disposés en oblique par rapport au sens de rotation du disque d'homogénéisation (7) de sorte que leur face avant dans le sens de la rotation est tournée vers l'espace d'homogénéisation (10), respectivement.

6. Dispositif de séparation selon la revendication 5, dans lequel l'insert de paroi (8) peut être disposé à l'intérieur du boîtier (1) de telle sorte qu'entre le disque d'homogénéisation (7) et la paroi latérale du boîtier (1) opposée à la paroi latérale par laquelle l'unité de pré-dosage (3) débouche sur le boîtier (1), un espace de captage (14) est formé qui est délimité radialement par une partie (15) de l'insert de paroi (8) .

7. Dispositif de séparation selon l'une quelconque des revendications 5 ou 6, dans lequel l'insert de paroi (8) peut être disposé dans le boîtier (1) de telle sorte qu'entre le disque d'homogénéisation (7) et la paroi latérale du boîtier opposée à la paroi latérale par laquelle l'unité de pré-dosage (3) débouche sur le boîtier un espace de captage (14) est formé dans lequel au moins un taquet (17) est disposé en rotation afin d'extraire du boîtier des graines disposées dans l'espace de captage (14) par l'intermédiaire d'un canal de retour (5) et de les ramener à l'unité de pré-dosage (3).

8. Dispositif de séparation selon la revendication 7, dans lequel un ou plusieurs taquets flexibles (18) sont disposés sur le disque d'homogénéisation (7), qui sont disposés en oblique par rapport au sens de rotation du disque d'homogénéisation (7) de sorte que leur face avant dans le sens de la rotation est détournée de l'espace d'homogénéisation (10) et tournée vers l'espace de captage (14), respectivement.

9. Dispositif de séparation selon la revendication 8, dans lequel l'unité de pré-dosage (3) présente une ouverture de distribution (19) débouchant radialement dans l'espace d'homogénéisation (19), et dans lequel un ou plusieurs taquets flexibles (18), dont la face avant dans le sens de la rotation est détournée de l'espace d'homogénéisation (10) et tournée vers l'espace de captage (14), respectivement, sont réalisés de telle sorte qu'ils balaient en partie l'ouverture de distribution (19) et guident ainsi des graines des matières granulaires qui sortent de l'ouverture de distribution (19) directement dans l'espace de captage (14) .

10. Semoir, comprenant deux ou plusieurs dispositifs de séparation selon l'une quelconque des revendications précédentes, comprenant en outre une tête de répartition reliée à l'unité de pré-dosage.

11. Procédé d'exploitation d'un semoir, dans lequel le semoir comprend au moins un dispositif de séparation selon l'une quelconque des revendications 1 à 9, le dispositif de séparation comprenant un dispositif de transport monté en rotation dans un boîtier (1) et coopérant avec un élément de guidage (9) de telle sorte que des matières granulaires peuvent être transportées d'une zone de réception à une zone de distribution, le dispositif de séparation comprenant une unité de pré-dosage (3) débouchant sur le boîtier par une paroi latérale du boîtier, dans lequel l'unité de pré-dosage permet d'introduire des matières granulaires dans le boîtier, le procédé comprenant :
le remplacement du dispositif de transport par le disque d'homogénéisation (7) du kit de conversion ;
**caractérisé par** la disposition de l'insert de paroi (8) du kit de conversion dans le boîtier du dispositif de séparation de sorte que l'insert de paroi avec le disque d'homogénéisation et des parties de la paroi latérale du boîtier, par laquelle l'unité de pré-dosage débouche sur le boîtier, forment un espace d'homogénéisation (10) dans lequel l'unité de pré-dosage peut introduire des matières granulaires.
